# DEMANDE DE BREVET EUROPEEN

(11) **EP 3 872 420 A1**
(43) Date de publication de la demande: **01.09.2021**
(21) Numéro de dépôt: 21160089.5
(22) Date de dépôt: 01.03.2021
(51) Int. Cl.: F25B 15/00, F01K 11/00, F01K 13/00, F28B 1/02, F28B 9/10, F28D 7/16, F01K 17/00, F28D 21/00

(54) **MACHINE À ABSORPTION POUR LA VALORISATION DE VAPEUR BASSE PRESSION ET SYSTÈME ASSOCIÉ**

(30) Priorité: 27.02.2020 FR 2001948
(71) Demandeur: CNIM Systèmes Industriels, 75008 Paris (FR)
(72) Inventeur: YAZBEK, Wael, 83200 TOULON (FR); NUNES, Frédéric, 83210 SOLLIÈS-TOUCAS (FR); MONORE, Estelle, 83200 TOULON (FR); MAILHOT, Dominique, 83500 LA SEYNE SUR MER (FR)
(74) Mandataire: Lefevre-Groboillot, David André

(57) **Abrégé**

Un aspect de l'invention concerne une machine à absorption caractérisée en ce qu'elle comprend :
- un générateur refroidissant une source chaude,
- un couple absorbeur-condenseur réchauffant une source à température intermédiaire,
- un évapo-condenseur réchauffant une source froide formée par une vapeur basse pression, l'évapo-condenseur étant un échangeur à tubes comprenant une première passe et une deuxième passe connectées,
- la première passe étant configurée pour condenser au moins une partie de la vapeur basse pression et
- la deuxième passe ayant une inclinaison d'angle non-nul par rapport à un plan horizontal, l'angle d'inclinaison étant tel que la vapeur basse pression condensée précédemment dans la première passe s'écoule dans la deuxième passe, la deuxième passe étant configurée pour condenser au moins une partie de la vapeur basse pression non condensée dans la première passe en ayant un nombre de tubes inférieur au nombre de tubes de la première passe.

## Description

### DOMAINE TECHNIQUE DE L'INVENTION

Le domaine technique de l'invention est celui des machines à absorption.

La présente invention concerne une machine à absorption comprenant un évapo-condenseur.

### ARRIERE-PLAN TECHNOLOGIQUE DE L'INVENTION

Les machines à absorption sont des systèmes thermiques générant du froid ou de la chaleur à partir de sources chaudes. Ces systèmes se développent car ils permettent des économies d'énergie en récupérant de la chaleur fatale à basse température.

Une machine à absorption comprend au moins quatre types d'échangeurs couplés deux à deux : un couple évaporateur/absorbeur et un couple générateur/condenseur. Ces deux couples sont chacun placés dans une enceinte à vide.

Une telle machine est connectée à trois sources : la source chaude qui fournit l'énergie thermique au générateur, la source froide connectée à l'évaporateur, et la source de refroidissement à température intermédiaire, dont le fluide circule dans l'absorbeur et le condenseur.

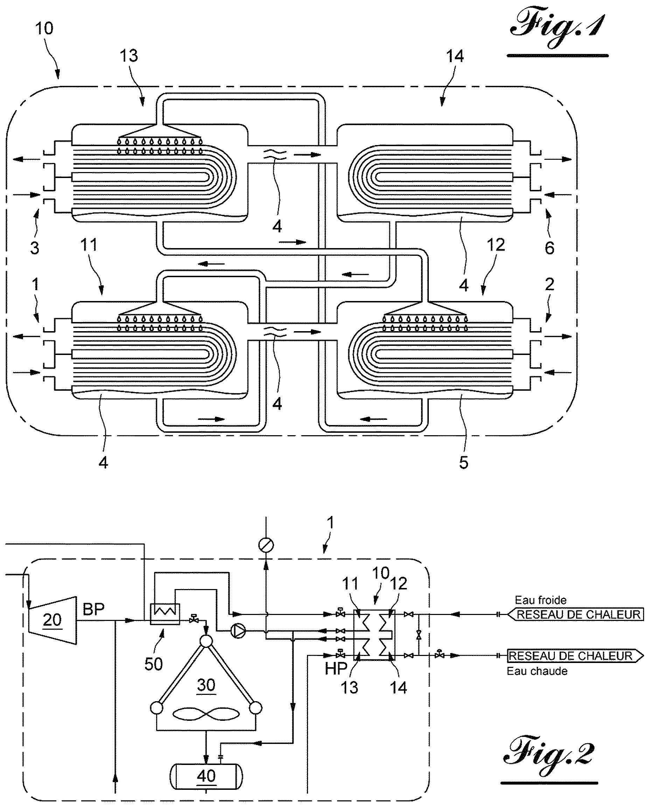

[Fig. 1] représente schématiquement une machine à absorption 10 selon l'état de la technique comprenant un évaporateur 11, un absorbeur 12, un générateur 13 et un condenseur 14, et étant connectée aux trois sources citées précédemment.

Dans le cycle de la machine à absorption 10, deux fluides sont mis en œuvre : un réfrigérant 4 et un absorbant 5. L'absorbant 5 a la capacité d'absorber la vapeur du réfrigérant 4, ce qui alimente le cycle de fonctionnement. Les couples de fluides les plus utilisés en pratique sont l'eau (H2O) comme réfrigérant 4 et le bromure de lithium (LiBr) comme absorbant 5, ou encore l'ammoniac (NH3) comme réfrigérant 4 et l'eau (H2O) comme absorbant 5. Ces couples sont choisis de façon à ce que l'absorbant 5 ait une grande affinité vis-à-vis du réfrigérant 4 et que le réfrigérant 4 ait une capacité à se vaporiser plus importante que l'absorbant 5, en d'autres termes il faut qu'il soit beaucoup plus volatil que l'absorbant 5. La source froide (non représentée) est connectée à un faisceau de tubes 1 de l'évaporateur 11. La source chaude (non représentée) est connectée à un faisceau de tubes 3 du générateur 13. La source de refroidissement à température intermédiaire (non représentée) est connectée à un faisceau de tubes 6 du condenseur et à un faisceau de tubes 2 de l'absorbeur.

Le cycle suivi par chacun des deux fluides réfrigérant 4 et absorbant 5 est le suivant :
Au niveau de l'évaporateur 11, le réfrigérant 4 est réparti sur le faisceau de tubes 1 contenant le fluide provenant de la source froide. La pression à l'intérieur de l'évaporateur 11 étant très faible, le réfrigérant 4 va se vaporiser en soustrayant de la chaleur au fluide provenant de la source froide qui circule dans le faisceau de tubes 1, qui est ainsi refroidit. Une partie du réfrigérant 4 ne se vaporise pas et est récupérée par un récupérateur situé dans le fond de l'évaporateur 11 pour être à nouveau répartie sur le faisceau de tubes 1.

Au sein de l'absorbeur 12, l'absorbant 5 est réparti sur le faisceau de tubes 2 contenant le fluide provenant de la source de refroidissement à température intermédiaire. L'absorbant 5 absorbe la vapeur de réfrigérant 4 et se dilue. Cette action produit une dépression qui permet une circulation de la vapeur de réfrigérant 4 de l'évaporateur 11 vers l'absorbeur 12. Le phénomène d'absorption génère aussi de la chaleur, laquelle est récupérée par le fluide provenant de la source de refroidissement à température intermédiaire. L'absorbant 5 réparti dilué est récupéré par un récupérateur situé dans le fond de l'absorbeur 12 puis est envoyé dans le générateur 13.

Au sein du générateur 13, l'absorbant 5 est réparti sur le faisceau de tubes 3 contenant le fluide provenant de la source chaude. Le réfrigérant 4 absorbé par l'absorbant 5 se vaporise alors et l'absorbant 5 est récupéré par un récupérateur situé dans le fond du générateur 13. L'absorbant 5 non dilué ainsi récupéré est renvoyé pour être réparti au sein de l'absorbeur 12. La vapeur de réfrigérant 4 ainsi formée au sein du générateur 13 est conduite vers le condenseur 14

Au sein du condenseur 14, elle se liquéfie car le condenseur 14 comprend un faisceau de tubes 6 contenant le fluide provenant de la source de refroidissement à température intermédiaire. Le réfrigérant 4 sous forme liquide est alors récupéré par un récupérateur situé dans le fond du condenseur 14 et est renvoyé pour être réparti au sein de l'évaporateur 11.

Dans un mode de fonctionnement en pompe à chaleur, ces machines permettent de valoriser une source froide à basse température connectée au faisceau de tubes 1 de l'évaporateur 11, afin de générer de la chaleur dans la source de chaleur à température intermédiaire connectée au faisceau de tubes 6 du condenseur 14 et au faisceau de tubes 2 de l'absorbeur 12, la chaleur générée dans la source de chaleur à température intermédiaire pouvant ensuite être utilisée par exemple dans un réseau de chaleur.

Une des sources de chaleur possible est la vapeur basse pression en échappement d'une turbine. Dans les centrales thermiques ou les incinérateurs, cette vapeur est généralement refroidie par l'atmosphère, par l'intermédiaire d'un aérocondenseur. Cette énergie résiduelle est donc perdue.

Il est possible de valoriser cette énergie en utilisant une machine à absorption 10.

[Fig. 2] présente une machine à absorption 10 en mode de fonctionnement pompe à chaleur dans un système 1 comprenant la machine à absorption 10, une turbine 20, un aérocondenseur 30, une bâche alimentaire 40 et un hydrocondenseur 50.

La façon de valoriser la vapeur basse pression BP en sortie de turbine 20 consiste classiquement à positionner un hydrocondenseur 50 sur le circuit de vapeur basse pression BP de sortie de la turbine 20. Cet hydrocondenseur 50 condense une partie de la vapeur d'eau basse pression BP et réchauffe de l'eau à température faible (par exemple entre 35 et 45°C suivant la pression de la vapeur basse pression). Cette eau est ensuite pompée en circuit fermé afin de constituer la source froide en entrée de l'évaporateur 11 de la machine à absorption 10 fonctionnant en mode pompe à chaleur. La source chaude de la machine à absorption 10 entrant dans le générateur 13 étant le plus souvent de la vapeur haute pression HP.

L'avantage de ce système 1 est de pouvoir utiliser des machines à absorption 10 de conception classique et fournies par de nombreux fournisseurs.

L'inconvénient est d'une part la nécessité d'installer du matériel supplémentaire, comme par exemple l'hydrocondenseur 50 et le circuit d'eau associé, et également la perte de rendement que génère l'utilisation de l'hydrocondenseur 50 du fait de l'utilisation du circuit d'eau intermédiaire et de l'hydrocondenseur 50 entre la machine à absorption 10 et la vapeur basse pression BP en sortie de la turbine 20.

Il existe donc un besoin de pouvoir valoriser de la vapeur basse pression avec un meilleur rendement et sans matériel supplémentaire.

### RESUME DE L'INVENTION

L'invention offre une solution aux problèmes évoqués précédemment, en permettant de valoriser directement la vapeur basse pression dans la machine à absorption, sans intermédiaire tel qu'un hydrocondenseur présenté précédemment.

Un aspect de l'invention concerne une machine à absorption caractérisée en ce qu'elle comprend :
- un générateur configuré pour refroidir une source chaude,
- un couple absorbeur-condenseur configuré pour réchauffer une source à température intermédiaire,
- un évapo-condenseur configuré pour réchauffer une source froide, la source froide étant formée par une vapeur basse pression, l'évapo-condenseur étant un échangeur à tubes comprenant une première passe et une deuxième passe connectées de façon à ce que la vapeur basse pression passe d'abord dans la première passe puis dans la deuxième passe, la première passe et la deuxième passe comprenant des tubes de géométrie identique,
   - la première passe étant configurée pour condenser au moins une partie de la vapeur basse pression et
   - la deuxième passe ayant une inclinaison d'un angle non-nul par rapport à un plan horizontal, l'angle d'inclinaison étant tel que la vapeur basse pression condensée précédemment dans la première passe s'écoule dans la deuxième passe, la deuxième passe étant configurée pour condenser au moins une partie de la vapeur basse pression non condensée dans la première passe en ayant un nombre de tubes inférieur au nombre de tubes de la première passe.

On entend par « évapo-condenseur » un échangeur de type évaporateur dont la source froide est formée par de la vapeur basse pression. La vapeur basse pression formant la source froide entre dans les tubes de l'évaporateur et se condense dans ces tubes, les tubes de l'évaporateur étant refroidis par l'action du fluide réfrigérant qui est réparti à l'extérieur des tubes et qui se vaporise dans la calandre de la machine. Cet échangeur est donc nommé un évapo-condenseur, condensant la vapeur basse pression de la source froide et évaporant le fluide réfrigérant réparti à l'extérieur des tubes.

Grâce à l'invention, la machine à absorption exploite au mieux la source froide :
- D'une part, la condensation de la vapeur basse pression se produit à température constante et permet donc à l'évapo-condenseur de la machine à absorption de fonctionner à température constante. Dans le cas d'un évaporateur classique, la température de la source froide circulant dans les tubes diminue au fur et à mesure qu'elle avance dans l'échangeur. Dans un condenseur, la température du tube est la température de condensation de la vapeur basse pression.
- D'autre part, cette température constante est plus élevée que par rapport à la solution comprenant un hydrocondenseur présentée précédemment. En effet, dans l'art antérieur, la source froide est réchauffée dans l'hydrocondenseur mais sera de température plus froide que la température de condensation théorique de la vapeur basse pression du fait du pincement de l'hydrocondenseur, c'est-à-dire de l'écart minimal de température au sein de l'hydrocondenseur.

Ainsi, la machine à absorption fonctionne à plus haute température par rapport à une solution classique et à température constante, permettant de réduire la surface et donc le coût de la machine à absorption.

En outre, l'évapo-condenseur de la machine à absorption selon l'invention est un échangeur à tube d'une forme particulière à deux passes déséquilibrées permettant une condensation de la totalité ou d'au moins une grande partie de la vapeur basse pression formant la source froide. La première passe a pour fonction de condenser partiellement la vapeur et la deuxième passe condense au moins une grande partie du reste de la vapeur non condensée dans la première passe. La deuxième passe est constituée de tubes inclinés permettant l'écoulement du condensat sans créer de zone de rétention. En outre la deuxième passe contient un nombre de tube beaucoup plus faible du fait de la réduction de volume entre la vapeur et l'eau, ce qui permet une réduction des coûts de fabrication.

Outre les caractéristiques qui viennent d'être évoquées dans le paragraphe précédent, la machine à absorption selon un aspect de l'invention peut présenter une ou plusieurs caractéristiques complémentaires parmi les suivantes, considérées individuellement ou selon toutes les combinaisons techniquement possibles :
- l'évapo-condenseur comprend au moins deux plénums, au moins un des deux plénums étant un plénum de sortie.
- l'évapo-condenseur comprend un tube d'aspiration des incondensables dans le plénum de sortie de l'évapo-condenseur.
- les au moins deux plénums sont entièrement soudés au corps dudit évapo-condenseur de manière à résister au vide créé par le tube d'aspiration des incondensables .

Un autre aspect de l'invention concerne un système de valorisation de vapeur basse pression en sortie d'un équipement caractérisé en ce qu'il comprend :
- une machine à absorption selon l'invention , la vapeur basse pression en sortie de l'équipement formant la source froide de la machine à absorption,
- au moins un aérocondenseur connecté à la sortie de vapeur basse pression de l'équipement, l'aérocondenseur étant en dérivation avec la machine à absorption.

Outre les caractéristiques qui viennent d'être évoquées dans le paragraphe précédent, le système de valorisation de vapeur basse pression selon un aspect de l'invention peut présenter une ou plusieurs caractéristiques complémentaires parmi les suivantes, considérées individuellement ou selon toutes les combinaisons techniquement possibles :
- l'évapo-condenseur comprend un circuit d'aspiration de vide.
- le tube d'aspiration des incondensables de l'évapo-condenseur est relié au circuit d'aspiration de vide de l'aérocondenseur.
- le système de valorisation de vapeur basse pression comprend en outre une vanne d'isolement de l'aérocondenseur gérée par la machine à absorption, la vanne d'isolement de l'aérocondenseur étant configurée pour isoler l'aérocondenseur de la sortie de vapeur basse pression de l'équipement.
- le système de valorisation de vapeur basse pression comprend en outre une bâche alimentaire, la vapeur basse pression condensée en sortie de la source froide de l'évapo-condenseur est collectée par ladite bâche alimentaire et la vapeur basse pression condensée en sortie de l'aérocondenseur est collectée par ladite bâche alimentaire.
- l'équipement est une turbine.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre une représentation schématique d'une machine à absorption selon l'état de la technique.
- La figure 2 montre une représentation schématique d'un système de valorisation de vapeur basse pression selon l'état de la technique.
- La figure 3 montre une représentation schématique d'un évapo-condenseur d'une machine à absorption selon l'invention pour la valorisation de vapeur basse pression.
- La figure 4 montre une représentation schématique d'une machine à absorption selon l'invention pour la valorisation de vapeur basse pression.
- La figure 5 montre une représentation schématique d'un système de valorisation de vapeur basse pression selon l'invention.

### DESCRIPTION DETAILLEE

Les figures sont présentées à titre indicatif et nullement limitatif de l'invention.

Sauf précision contraire, un même élément apparaissant sur des figures différentes présente une référence unique.

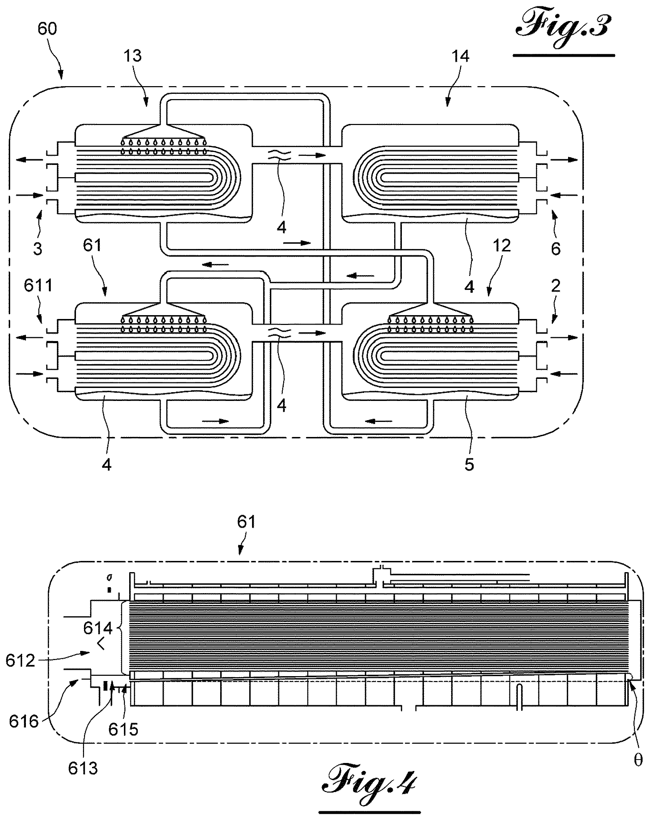

La [Fig. 3] montre une représentation schématique d'une machine à absorption selon l'invention pour la valorisation de vapeur basse pression.

Selon l'invention, la machine à absorption 60 est relié directement à la sortie de vapeur basse pression BP, la vapeur basse pression BP formant la source froide de la machine à absorption 60. On entend par « vapeur basse pression » une vapeur dont la pression est inférieur à 1 bar absolu.? On entend par « la vapeur basse pression forme la source froide » le fait que la sortie de vapeur basse pression BP est utilisée comme source froide dans la machine à absorption 60. La source froide entre dans l'échangeur 61 par le faisceau de tubes 611. Au sein de l'échangeur 61, un fluide réfrigérant 4 est réparti sur les tubes du faisceau de tubes 611.

Un échange thermique a lieu : le fluide réfrigérant 4 se vaporise en soustrayant de la chaleur à la vapeur basse pression BP de la source froide qui circule dans les tubes du faisceau de tubes 611 et la vapeur basse pression BP se condense du fait de la soustraction de chaleur de la vapeur basse pression BP par le fluide réfrigérant 4. On appelle donc cet échangeur 61 un évapo-condenseur 61. Un avantage de l'utilisation de la vapeur basse pression BP en direct comme source froide est que, comme expliqué précédemment, la condensation de la vapeur basse pression BP dans les tubes du faisceau de tubes 611 se produit à température constante. Ainsi, l'évapo-condenseur 61 fonctionne à température constante, tandis que dans un évaporateur 11 classique la température de la source froide circulant dans les tubes diminue au fur et à mesure qu'elle avance dans l'échangeur. En outre, l'absence d'un hydrocondenseur 50 tel que celui présenté dans l'état de l'art permet de ne pas avoir de perte de rendement entre la sortie de vapeur basse pression BP et les tubes du faisceau de tubes 611 en ayant une source froide de température plus élevée que dans le système 1 de l'état de l'art où un hydrocondenseur 50 était présent.

Ainsi, grâce à une source froide de température plus élevée que dans l'état de l'art, dans l'évapo-condenseur 61 représenté à la Figure 3, une quantité plus importante de fluide réfrigérant 4 se vaporise pour être condensée dans le condenseur 12 et continuer le cycle de la machine à absorption. La machine à absorption 60 selon l'invention a donc un meilleur rendement que les machines à absorption 10 de l'état de la technique et permet ainsi de mieux valoriser la vapeur basse pression BP.

L'invention porte en outre sur une forme particulière de l'évapo-condenseur 61, l'évapo-condenseur selon l'invention étant un échangeur à tubes comprenant une deux passes déséquilibrées.

La [Fig. 4] montre une représentation schématique de l'évapo-condenseur 61 de la machine à absorption 60 selon l'invention pour la valorisation de vapeur basse pression BP.

L'évapo-condenseur 61 comprend deux passes déséquilibrées. La première passe 614 comprend un nombre N de tubes et permet la condensation d'une partie de la vapeur basse pression BP. La deuxième passe 615 comprend un nombre M de tubes inférieur au nombre N de tubes de la première passe 614 et permet de condenser au moins une partie du reste de la vapeur basse pression BP non condensée dans la première passe 615. Dans un mode de réalisation privilégié, la deuxième passe 615 condense toute la vapeur basse pression BP non condensée dans la première passe 614. La deuxième passe 615 comprend un nombre M de tubes inférieur strictement au nombre N de tubes de la première passe 614 du fait de la réduction de volume entre la vapeur basse pression BP et le condensat résultant de la condensation de la vapeur basse pression BP. Par exemple, la première passe peut comprendre un nombre de tubes N compris typiquement entre 600 et 800 et la deuxième passe un nombre de tubes M compris typiquement entre 24 et 80. Les fourchettes de valeurs données pour N et M ne sont pas limitatives, les valeurs de N et M pouvant être très variables suivant les projets.

En outre, la deuxième passe 615 est inclinée pour permettre l'écoulement de la vapeur basse pression BP condensée précédemment dans la première passe 614 sans créer de zone de rétention. Cela améliore le rendement en permettant à plus de vapeur basse pression BP de circuler et d'être condensée au sein des tubes du faisceau de tubes 611 comprenant les deux passes 614 et 615, l'inclinaison de la deuxième passe 615 évitant la création de zones de rétention qui ralentiraient la capacité de l'évapo-condenseur 61. Par exemple, comme représenté à la [Fig. 4], il suffit à la deuxième passe 615 d'être inclinée d'un angle θ par rapport à un plan horizontal, l'angle θ étant d'une valeur supérieure à 0 degrés, compris par exemple entre 0,2 degré et 1 degré pour permettre l'écoulement du condensat résultant de la condensation de la vapeur basse pression BP. Ainsi, les tubes compris dans la deuxième passe 615 appartiennent à un plan incliné d'un angle θ non-nul par rapport au plan horizontal. Le plan horizontal est préférentiellement un plan horizontal terrestre, lorsque la machine à absorption est en fonctionnement posée sur le sol suivant ce plan horizontal terrestre.

L'évapo-condenseur 61 comprend en outre deux plénums 612 et 613, aussi appelés « boites à eau ». Ces plénums permettent la répartition de la vapeur basse pression dans les différents tubes du faisceau de tubes 611 et en particulier dans la première passe 614 pour le plénum 612 et de la première passe 614 à la deuxième passe 615 pour le plénum 613. Dans un autre mode de réalisation, l'évapo-condenseur 61 peut ne comprendre qu'un plénum 612 divisé en deux enceintes, une pour chaque passe.

Dans une variante à l'invention, l'évapo-condenseur 61 comprend un tube d'aspiration des incondensables 616 installé dans le plénum 613 en sortie de l'échangeur. Ce tube d'aspiration des incondensables 616 permet d'éviter une accumulation de gaz incondensables conduisant à un dysfonctionnement de l'évapo-condenseur 61 et un arrêt de la condensation au sein de celui-ci. En effet, la vapeur basse pression BP contient toujours une quantité de gaz qui n'est pas condensable tel que de l'air. Si ces gaz incondensables ne sont pas évacués, ils vont s'accumuler dans les tubes du faisceau de tubes 611 et bloquer la condensation de la vapeur basse pression BP. Ce tube d'aspiration des incondensables 616 peut être relié directement à un circuit d'aspiration de vide des aérocondenseurs (non représenté) dans le cas où la machine à absorption 60 est située dans une usine qui comprend des aérocondenseurs, permettant l'utilisation d'équipement existant déjà au sein de l'usine. Le tube d'aspiration des incondensables 616 permet de garantir un bon fonctionnement de l'évapo-condenseur 61 en le maintenant sous vide en permanence.

Les plénums 612 et 613 sont avantageusement adaptés de manière à résister au vide créé par le tube d'aspiration des incondensables 616, par exemple en utilisant un design entièrement soudé, c'est-à-dire en soudant le entièrement le plénum au corps de l'évapo-absorbeur 61, et en utilisant des matériaux de haute résistance comme par exemple l'inox duplex.

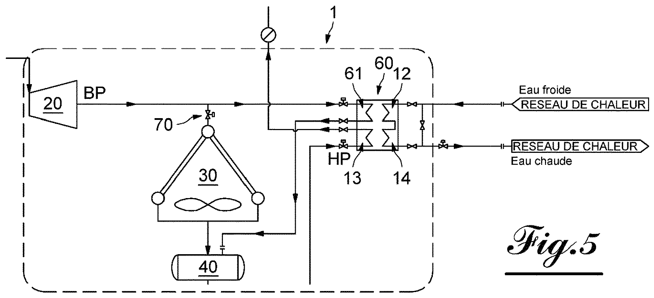

La [Fig. 5] montre une représentation schématique d'un système de valorisation de vapeur basse pression selon l'invention.

Le système de valorisation de vapeur basse pression 2 selon l'invention comprend un dispositif 20 comprenant une sortie de vapeur basse pression BP, un aerocondenseur 30, une bâche alimentaire 40, la machine à absorption 60 et une vanne d'isolement 70 de l'aerocondenseur 30.

La machine à absorption 60 comprise dans le système 2 de valorisation de vapeur basse pression BP est la machine à absorption 60 présentée à la Figure 3 et comprenant l'évapo-condenseur 61.

La machine à absorption 60 est reliée directement à la sortie de vapeur basse pression BP d'un équipement 20. On entend par « reliée directement » le fait que la vapeur basse pression BP qui est acheminée à la machine à absorption 60 y est acheminée sans échange de chaleur avec un autre dispositif échangeur de chaleur intermédiaire durant l'acheminement. L'équipement 20 peut être tout équipement produisant un excès de vapeur basse pression BP. Par exemple, cet équipement 20 peut être une turbine, ou tout autre équipement produisant un excès de vapeur basse pression BP.

La vapeur basse pression BP en sortie de l'équipement 20 est acheminée à la machine absorption 60 via un conduit par exemple, et est utilisée par la machine à absorption 60 comme source froide dans l'évapo-condenseur 61 comme présenté précédemment. La machine à absorption 60 comprend en outre un générateur configuré pour refroidir une source chaude, par exemple de la vapeur à haute pression HP. La vapeur à haute pression HP peut par exemple être d'une pression située entre 2 et 10 bars.

Dans un autre mode de réalisation, le système de valorisation 2 selon l'invention peut comprendre en outre au moins un aérocondenseur 30, une bâche alimentaire 40 et une vanne d'isolement 70 de l'aérocondenseur 30.

Dans ce mode de réalisation, l'aérocondenseur 30 est placé en dérivation de la machine à absorption 60 sur le conduit de sortie de la vapeur basse pression BP de l'équipement 20. Ainsi, une majeure partie de la vapeur basse pression BP est valorisée par la machine à absorption 61 et l'autre partie de la vapeur basse pression BP qui ne peut être valorisée par la machine à absorption 60, par exemple pour des raisons de rendement de la machine à absorption 60, est valorisée par l'aérocondenseur 30.

La vapeur basse pression BP condensée dans l'aérocondenseur 30, c'est-à-dire le condensat résultant de la condensation, est ensuite redirigée vers une bâche alimentaire 40. Une bâche alimentaire permet le stockage de condensats sans perte d'énergie et permet une sécurisation de l'approvisionnement d'un équipement, par exemple de l'équipement 20, en condensat, par exemple en eau. La bâche alimentaire 40 permet ainsi de s'assurer que l'équipement aura toujours assez de fluide pour fonctionner. La vapeur basse pression BP formant la source froide de l'évapo-condenseur 61 condensée, c'est-à-dire en sortie de l'évapo-condenseur 61, est aussi redirigée vers la bâche alimentaire 40, permettant d'utiliser un équipement existant et donc évitant l'ajout d'un autre équipement.

Dans une variante à ce second mode de réalisation, une vanne d'isolement 70 de l'aérocondenseur 30 est placée en amont de l'aérocondenseur 30. Cette vanne d'isolement 70 permet de réguler la pression de vapeur basse pression BP. En effet, dans les cas où le débit en sortie de l'équipement 20 est faible, cette vanne d'isolement 70 permet d'éviter que la pression ne diminue trop du fait de l'aspiration de l'aérocondenseur 30. La vanne d'isolement 70 de l'aérocondenseur 30 est ainsi configurée pour isoler l'aérocondenseur 30 de la sortie de vapeur basse pression BP de l'équipement 20 afin de permettre à la machine à absorption 60 de recevoir toute la vapeur basse pression BP issue de la sortie de l'équipement 20. Par exemple, la vanne d'isolement 70 peut être une électrovanne.

La régulation de la vanne d'isolement 70 peut être connectée à un automate de la machine à absorption 60 afin de se fermer si la machine à absorption 60 détecte une pression trop basse dans le circuit de vapeur basse pression BP. Ainsi, la machine à absorption 60 peut gérer directement et automatiquement la vanne d'isolement 70. On entend par « gérer » le fait de pouvoir modifier l'ouverture et la fermeture de la vanne d'isolement 70. Par exemple, lorsque la vanne d'isolement 70 est une électrovanne, la gestion de la vanne d'isolement 70 par la machine à absorption 60 comprend l'envoi d'un signal électrique d'un organe de commande de la machine à absorption, par exemple un automate de la machine à absorption 60, vers un organe de commande de l'électrovanne. La machine à absorption 60 peut alors comprendre au moins un capteur de pression afin de déterminer le niveau de pression dans le circuit de source froide de l'évapo-condenseur 61. Lorsque la pression détectée par le capteur de pression dans la source froide est trop basse, l'organe de commande de la machine à absorption 60 peut envoyer un signal de commande de fermeture de la vanne d'isolement 70, afin d'isoler l'aérocondenseur 30 du circuit de sortie de vapeur basse pression de l'équipement 20. Lorsque la pression détectée par le capteur de pression dans la source froide dépasse un seuil prédéterminé, l'organe de commande de la machine à absorption 60 peut envoyer un signal de commande d'ouverture de la vanne d'isolement 70, afin de réintégrer l'aérocondenseur 30 au circuit de sortie de vapeur basse pression de l'équipement 20.

## Revendications

1. Machine à absorption (60) **caractérisée en ce qu'**elle comprend :
- un générateur (13) configuré pour refroidir une source chaude,
- un couple absorbeur-condenseur (12,14) configuré pour réchauffer une source à température intermédiaire,
- un évapo-condenseur (61) configuré pour réchauffer une source froide, la source froide étant formée par une vapeur basse pression (BP), l'évapo-condenseur (61) étant un échangeur à tubes comprenant une première passe (614) et une deuxième passe (615) connectées de façon à ce que la vapeur basse pression (BP) passe d'abord dans la première passe (614) puis dans la deuxième passe (615), la première passe (614) et la deuxième passe (615) comprenant des tubes de géométrie identique,
∘ la première passe (614) étant configurée pour condenser au moins une partie de la vapeur basse pression (BP) et
∘ la deuxième passe (615) ayant une inclinaison d'un angle non-nul par rapport à un plan horizontal, l'angle d'inclinaison étant tel que la vapeur basse pression (BP) condensée précédemment dans la première passe (614) s'écoule dans la deuxième passe (615), la deuxième passe (615) étant configurée pour condenser au moins une partie de la vapeur basse pression (BP) non condensée dans la première passe (614) en ayant un nombre de tubes (M) inférieur au nombre de tubes (N) de la première passe (614).

2. Machine à absorption (60) selon la revendication précédente **caractérisé en ce que** l'évapo-condenseur (61) comprend au moins deux plénums (612,613), au moins un des deux plénums (612, 613) étant un plénum de sortie.

3. Machine à absorption (60) selon la revendication précédente **caractérisé en ce que** l'évapo-condenseur (61) comprend un tube d'aspiration des incondensables (616) dans le plénum de sortie de l'évapo-condenseur (61).

4. Machine à absorption (60) selon l'une quelconque des revendications 2 ou 3 **caractérisé en ce que** les au moins deux plénums (612, 613) sont entièrement soudés au corps dudit évapo-condenseur (61) de manière à résister au vide créé par le tube d'aspiration des incondensables (616).

5. Système de valorisation (2) de vapeur basse pression (BP) en sortie d'un équipement (20) **caractérisé en ce qu'**il comprend :
- une machine à absorption (60) selon la revendication 1, la vapeur basse pression (BP) en sortie de l'équipement (20) formant la source froide de la machine à absorption (60),
- au moins un aérocondenseur (30) connecté à la sortie de vapeur basse pression (BP) de l'équipement (20), l'aérocondenseur (30) étant en dérivation avec la machine à absorption (60).

6. Système de valorisation (2) de vapeur basse pression (BP) en sortie d'un équipement (20) **caractérisé en ce qu'**il comprend :
- une machine à absorption (60) selon l'une quelconque des revendications 2 à 4, la vapeur basse pression (BP) en sortie de l'équipement (20) formant la source froide de la machine à absorption (60),
- au moins un aérocondenseur (30) connecté à la sortie de vapeur basse pression (BP) de l'équipement (20), l'aérocondenseur (30) comprenant un circuit d'aspiration de vide, l'aérocondenseur (30) étant en dérivation avec la machine à absorption (60).

7. Système de valorisation (2) de vapeur basse pression (BP) selon la revendication précédente **caractérisé en ce que** le tube d'aspiration des incondensables (616) de l'évapo-condenseur (61) est relié au circuit d'aspiration de vide de l'aérocondenseur (30).

8. Système de valorisation (2) de vapeur basse pression (BP) selon l'une quelconque des revendications 5 à 7 **caractérisé en ce qu'**il comprend en outre une vanne d'isolement (70) de l'aérocondenseur (30) gérée par la machine à absorption (60), la vanne d'isolement (70) de l'aérocondenseur (30) étant configurée pour isoler l'aérocondenseur (30) de la sortie de vapeur basse pression (BP) de l'équipement (20).

9. Système de valorisation (2) de vapeur basse pression (BP) selon l'une des revendications 5 à 8 **caractérisé en ce qu'**il comprend une bâche alimentaire (40), **en ce que** la vapeur basse pression (BP) condensée en sortie de la source froide de l'évapo-condenseur (61) de la machine à absorption (60) est collectée par ladite bâche alimentaire (40) et **en ce que** la vapeur basse pression (BP) condensée en sortie de l'aérocondenseur (30) est collectée par ladite bâche alimentaire (40).

10. Système de valorisation (2) de vapeur basse pression (BP) selon l'une des revendications 5 à 9 **caractérisé en ce que** l'équipement (20) est une turbine.
